# EUROPÄISCHE PATENTANMELDUNG

(11) **EP 2 845 918 A1**
(43) Veröffentlichungstag der Anmeldung: **11.03.2015**
(21) Anmeldenummer: 13182974.9
(22) Anmeldetag: 04.09.2013
(51) Int. Cl.: C23C 4/08, B22F 3/105, B29C 67/00, B41J 3/407, B41J 3/413, C04B 35/64, C23C 4/18, C23C 24/08, C23C 28/00, F01D 5/16, F01D 5/18, F01D 5/28

(54) **Verfahren zur zumindest teilweisen Beschichtung einer Schaufel, eine Beschichtungsvorrichtung und eine Schaufel**

(71) Anmelder: Siemens Aktiengesellschaft, 80333 München (DE)
(72) Erfinder: Burbaum, Bernd, 14612 Falkensee (DE); Neddemeyer, Torsten, 14532 Kleinmachnow (DE)

(57) **Zusammenfassung**

Die Erfindung betrifft ein Verfahren zur zumindest teilweisen Beschichtung einer Schaufel, wobei die Schaufel zumindest einen Schaufelfuß (120) und ein sich daran anschließendes Grundschaufelblatt (55) umfasst, wobei der Schaufelfuß (120) zumindest eine Zuführung (40) für ein Kühlmittel aufweist, gekennzeichnet durch die folgenden Schritte:
- Bereitstellen des Grundschaufelblatts (55) aus einem Grundwerkstoff, umfassend zumindest eine Grundschaufelmantelfläche (56) und eine Oberseite (75) sowie eine sich dem Schaufelfuß (120) anschließende Unterseite (76),
- zumindest teilweises Aufbringen einer Anbindungsschicht (45) auf die Grundschaufelmantelfläche (56),
- Aufbringen einer Wärmedämmschicht (70) zumindest auf die Anbindungsschicht (45) durch ein generatives Fertigungsverfahren, wobei beim Aufbringen in die Wärmedämmschicht (70) zumindest ein Kühlkanal (50) zum Führen eines Kühlmittels derart eingebracht wird, dass das in den Schaufelfuß (120) einströmende Kühlmittel durch den Kühlkanal (50) zumindest teilweise ausgeströmt wird.

Weiterhin betrifft die Erfindung eine Beschichtungsvorrichtung und eine Schaufel.

## Beschreibung

Die Erfindung betrifft ein Verfahren zur zumindest teilweisen Beschichtung einer Schaufel, wobei die Schaufel einen Schaufelfuß und ein sich daran anschließendes Grundschaufelblatt umfasst, wobei der Schaufelfuß zumindest eine Zuführung für ein Kühlmittel aufweist, sowie eine Beschichtungsvorrichtung als auch eine Schaufel.

Für stationäre Gasturbinen (mit früher üblichen Werkstofftemperaturen von ca. 950 °C) und für Gasturbinen in Flugtriebwerken (mit früher üblichen Eintrittstemperaturen von ca. 1100 °C) ist eine Steigerung der Eintrittstemperatur durch den Einsatz speziell entwickelter Legierungen als Grundwerkstoffe für die thermisch hoch belasteten Teile, wie Leitschaufeln, Laufschaufeln, Hitzeschildelemente und dergleichen, erreicht worden. Neben thermomechanischen Beanspruchungen sind die Komponenten von Gasturbinen auch chemischen Angriffen, beispielsweise durch Rauchgase mit Temperaturen bis über 1300 °C, ausgesetzt. Für eine hinreichende Beständigkeit gegenüber solchen Angriffen ist eine solche Komponente mit einer Wärmedämmschicht (TBC) überzogen. Wärmedämmschichten enthalten üblich wenigstens einen keramischen Anteil und eine darunterliegende metallische Haftschicht. Die Vorteile von Wärmedämmschichtsystemen sind allgemein bekannt.

Die keramischen Beschichtungen werden auf die Schaufeln und zwar nach konventionellen, d. h. physikalischen Verfahren wie beispielsweise thermischem Spritzen und chemischer Dampfabscheidung. Die Kühlkanäle werden nachträglich in einem separaten Arbeitsgang gebohrt.

Allerdings weist die nachträgliche Bohrung der Kühlkanäle gewisse Nachteile auf, wie beispielsweise der Bedarf eines zusätzlichen Arbeitsgangs, eventuell zusätzliche Arbeitskräfte zur Beschichtung der Bauteile sowie eine Verlängerung der Herstellungsdauer der Bauteile.

Eine erste Aufgabe der Erfindung ist die Angabe eines vereinfachten Verfahrens zur zumindest teilweisen Beschichtung einer Schaufel, insbesondere einer Turbinenschaufel, welches das oben genannte Problem löst. Weiterhin liegt der Erfindung die zweite Aufgabe zugrunde, eine Beschichtungsvorrichtung anzugeben, insbesondere zur Durchführung des Verfahrens. Die dritte Aufgabe liegt in der Angabe einer Schaufel.

Die erste Aufgabe wird gelöst durch die Angabe eines Verfahrens zur zumindest teilweisen Beschichtung einer Schaufel, wobei die Schaufel zumindest einen Schaufelfuß und ein sich daran anschließendes Grundschaufelblatt umfasst, und wobei der Schaufelfuß zumindest eine Zuführung für ein Kühlmittel aufweist, gekennzeichnet durch die folgenden Schritte:
- Bereitstellen des Grundschaufelblatts aus einem Grundwerkstoff, umfassend zumindest eine Grundschaufelmantelfläche und eine Oberseite sowie eine sich dem Schaufelfuß anschließenden Unterseite,
- zumindest teilweises Aufbringen einer Anbindungsschicht auf die Grundschaufelmantelfläche,
- Aufbringen einer Wärmedämmschicht zumindest auf die Anbindungsschicht durch ein generatives Fertigungsverfahren, wobei beim Aufbringen in die Wärmedämmschicht zumindest ein Kühlkanal zum Führen eines Kühlmittels derart eingebracht wird, dass das in den Schaufelfuß einströmende Kühlmittel durch den Kühlkanal zumindest teilweise ausgeströmt wird.

Die Wärmedämmschicht wird mit Kühlkanälen aufgebaut, so dass im Betrieb das Kühlmittel allein durch den Schaufelfuß in die Wärmedämmschicht einströmt. Dies bedeutet, dass der Laserbohrprozess durch die Wärmedämmschicht und die Grundschaufel des Stands der Technik, welche meist aus Nickelbasis-Superlegierung ist, entfällt. Dadurch ergeben sich Kostenvorteile. Zudem ergibt sich eine Leistungssteigerung der Schaufel bzw. der Gasturbine, da effektiver gekühlt wird, d.h. es ist weniger Kühlmittel notwendig. Zudem ist die Wärmedämmschicht durch den Wegfall der Bohrungen weniger anfällig für Risse. Dadurch ergibt sich eine Verlängerung der Lebensdauer.

Bevorzugt wird als generatives Fertigungsverfahren ein 3D-Laserdruckverfahren angewandt. In bevorzugter Ausgestaltung wird als generatives Fertigungsverfahren das selektive Laserschmelzen (SLM) oder das Selektive Lasersintern (SLS) angewandt. Dabei lassen sich bei dem selektiven Laserschmelzen besonders gut Hohlstrukturen herstellen.

In einem bevorzugten Ausführungsbeispiel führt der zumindest eine Kühlkanal von der Unterseite zur Oberseite, so dass das durch den Schaufelfuß in den Kühlkanal einströmende Kühlmittel an der Oberseite ausgeströmt wird. Damit wird die Schaufelspitze gekühlt.

In einem besonders bevorzugten Ausführungsbeispiel wird zusätzlich in die Wärmedammschicht ein Kühlquerkanal eingebracht, welcher den Kühlkanal mit der Wärmedämmschichtaußenseite strömungstechnisch verbindet, so dass das durch den Schaufelfuß einströmende Kühlmittel zumindest teilweise durch den Kühlquerkanal ausströmt. Bevorzugt wird der Kühlquerkanal im Wesentlichen senkrecht zum Kühlkanal eingebracht. Das durch den Schaufelfuß einströmende Kühlmittel kann somit auch teilweise durch diese Kühlquerkanäle an der Wärmedämmschichtaußenseite ausgeströmt werden. Dadurch wird auf der Wärmedämmschichtaußenseite eine Filmkühlung ausgebildet, durch welche die Wärmedämmschicht großflächig gekühlt wird und durch welche ein direkter Kontakt der Wärmedämmschicht mit dem Heißgas vermieden wird.

Bevorzugt wird die Anbindungsschicht durch thermisches Spritzen aufgebracht. Diese Anbindungsschicht wird häufig auch als Haftvermittlerschicht bezeichnet und ist zumeist metallisch. Diese Anbindungsschicht ist bevorzugt eine dünne Schicht (20 µm - 50 µm) und dient dazu, eine geeignete Anbindung der Wärmedämmschicht an den Grundwerkstoff, beispielsweise Nickelbasis-Superlegierung, der Grundschaufel zu erzielen.

In einem bevorzugten Ausführungsbeispiel wird in die Grundschaufel zur Führung eines Kühlfluids durch die Grundschaufel von der Unterseite zur Oberseite zumindest ein Kühlsystem eingebracht, wobei während des generativen Fertigungsprozesses die Grundschaufel durch das durch dieses Kühlsystem strömende Kühlfluid gekühlt wird. Für den Herstellungsprozess von keramischen Wärmedämmschichten durch generative Fertigungsverfahren sind Vorwärmtemperaturen von 1200 °C einzusetzen, um Risse und Anbindungsfehler zu vermeiden. Daher weist die Grundschaufel bevorzugt während des Herstellungsprozesses eine Innenkühlung durch durchströmendes Kühlmittel auf. So kann die Grundschaufel vor einer Schädigung während des Aufbringens der Wärmedämmschicht geschützt werden.

In einem bevorzugten Ausführungsbeispiel wird die Wärmedämmschicht durch Verfestigen eines Teils eines auf die Anbindungsschicht aufbrachten Pulverbettes hergestellt, wobei nach dem Verfestigen des einen Teils ein neues Pulverbett aufgebracht wird, so dass die Wärmedammschicht schichtweise hergestellt wird.

In einer bevorzugten Ausgestaltung wird die Grundschaufel mittels einer rotierbaren Haltevorrichtung drehbar und/oder verschiebbar gelagert. Dies kann z.B. ein Roboterarm sein. Dabei wird die Schaufel dabei liegend bearbeitet und über einen Roboterarm drehbar und verschiebbar aufgehängt.

Bevorzugt wird nach Aufbringen eines Teils der Wärmedämmschicht die Grundschaufel mit der Anbindungsschicht mittels der rotierbaren Haltevorrichtung gedreht und/oder verschoben. Dabei kann die Wärmedämmschicht auf einem kleineren Abschnitt der Anbindungsschicht erst vollständig aufgetragen werden oder schichtweise auf der gesamten Anbindungsschicht. Bevorzugt wird nach dem Fertigstellen der Wärmedämmschicht das nicht verfestigte Pulver entfernt. Dies kann z.B. durch herausblasen oder herausschütteln bewerkstelligt werden.

Die zweite Aufgabe wird gelöst durch die Angabe einer Beschichtungsvorrichtung zur Herstellung einer Wärmedämmschicht auf einer Grundschaufel mit einer Anbindungsschicht und einem Schaufelfuß umfassend:
a) einer rotierbaren Halteeinrichtung, in welcher der Schaufelfuß derart angebracht ist, dass die Grundschaufel mit der Anbindungsschicht im Wesentlichen horizontal ausgerichtet ist,
b) ein Pulverbett aus Pulver, welches auf zumindest einem Teil der Anbindungsschicht aufgebracht ist,
c) einen Verfestiger, welcher auf einer Basis eines vorab generierten Soll-Datenmodells zumindest einen bestimmten Teil des Pulvers im Pulverbett verfestigt.

Bevorzugt ist der Verfestiger ein Laser. Bevorzugt ist die Halteeinrichtung drehbar und/oder verschiebbar gelagert. Dadurch ist eine besonders einfache Bearbeitung möglich. So kann, z.B. das Pulverbett vereinfacht aufgebracht werden als auch, z.B. der Laser bzw. Verfestiger fest installiert werden. Bevorzugt ist die Halteeinrichtung ein Roboterarm.

Die dritte Aufgabe wird gelöst durch die Angabe einer Schaufel, wobei die Schaufel einen Schaufelfuß und ein sich daran anschließendes Grundschaufelblatt umfasst, wobei der Schaufelfuß zumindest eine Zuführung für ein Kühlmittel aufweist, wobei auf dem Grundschaufelblatt zumindest teilweise eine durch thermisches Spritzen aufgebrachte Anbindungsschicht vorgesehen ist, und wobei auf dieser Anbindungsschicht eine durch ein generatives Fertigungsverfahren aufgebrachte Wärmedämmschicht mit zumindest einem Kühlkanal vorgesehen ist, und wobei der zumindest eine Kühlkanal mit der Zuführung im Schaufelfuß strömungstechnisch verbunden ist.

Diese Schaufel hat eine besonders gute Lebensdauer und zeichnet sich durch einen geringen Kühlmittelverbrauch aus, da sie keine Bohrungen in der Grundschaufelmantelfläche aufweist.

In bevorzugter Ausgestaltung weist die Grundschaufel zumindest einen Grundschaufelmantel, eine Oberseite und eine Unterseite auf, und wobei lediglich die Oberseite und die Unterseite zumindest eine Kühlöffnung für ein Kühlmittel aufweisen. Bevorzugt ist zumindest ein Kühlquerkanal vorgesehen, welcher strömungstechnisch den Kühlkanal mit einer Wärmedämmschichtaußenseite verbindet, so dass das durch den Kühlkanal strömende Kühlmittel zumindest teilweise an der Wärmedämmschichtaußenseite ausströmbar ist.

In einer bevorzugten Ausgestaltung ist der Kühlquerkanal im Wesentlichen senkrecht zum Kühlkanal angeordnet.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: eine aus dem Stand der Technik bekannte Turbinenlaufschaufel in einer perspektivischen Darstellung,
- FIG 2: schematisch und im Querschnitt einen Ausschnitt aus der Grundschaufel mit Anbindungsschicht und Wärmedämmschicht sowie den Schaufelfuß,
- FIG 3: schematisch die Beschichtungsvorrichtung und schematisch das Verfahren.

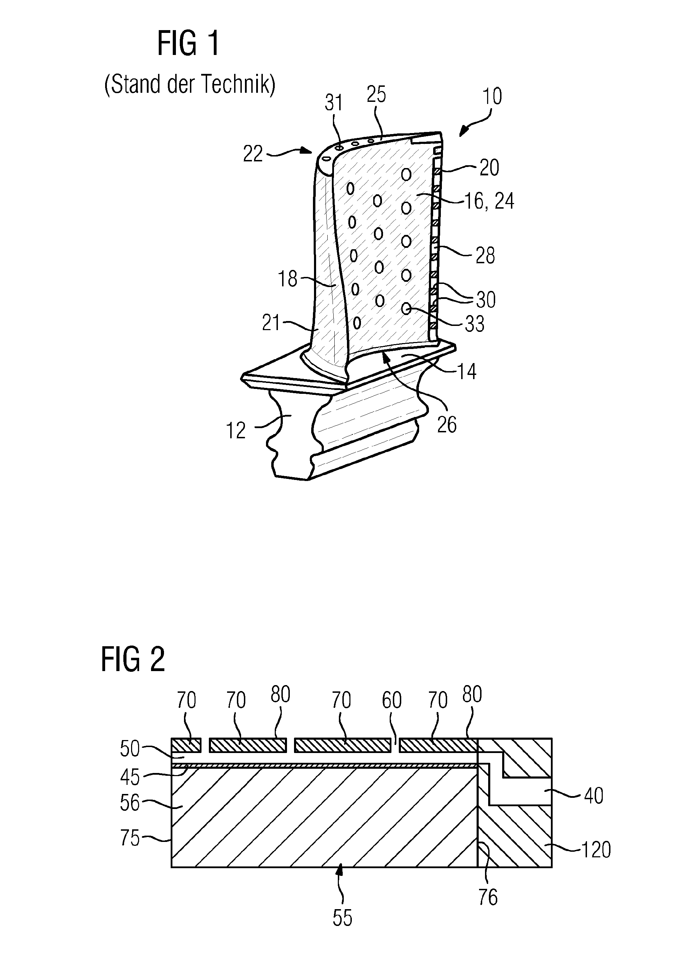

Eine Gasturbinenschaufel 10 nach dem Stand der Technik ist in FIG 1 perspektivisch dargestellt. Die Gasturbinenschaufel 10 ist gemäß FIG 1 als Laufschaufel ausgebildet. Die Erfindung kann auch in einer nicht dargestellten Leitschaufel einer Gasturbine verwendet werden. Die Turbinenschaufel 10 umfasst beispielsweise einen im Querschnitt tannenbaumförmigen Schaufelfuß 12 sowie eine daran angeordnete Plattform 14. An die Plattform 14 schließt sich ein aerodynamisch gekrümmtes Schaufelblatt 16 an, welches eine Vorderkante 18 sowie eine Hinterkante 20 aufweist. Der Schaufelfuß 16 umfasst dabei eine Zuführung für Kühlmittel (nicht gezeigt).

Das Schaufelblatt 16 umfasst eine rückseitige Saugseitenwand 22 sowie eine vorderseitige Druckseitenwand 24. Das Schaufelblatt 16 besteht zumindest aus einem Grundschaufelblatt. Dieses weist eine Oberseite 25 und eine Unterseite 26, als auch eine Grundschaufelmantelfläche auf. Das Grundschaufelblatt ist innen mit Kühlkanälen versehen, welche sich an die Zuführung im Schaufelfuß 12 anschließen. Dazu weist die Oberseite 25 Kühlöffnungen 31 zum Ausströmen des Kühlmittels auf. Auch weist die Unterseite 26 Kühlöffnungen zum Einströmen des Kühlmittels in das Grundschaufelblatt auf (nicht gezeigt). Die Grundschaufelmantelfläche ist mit einer Wärmedämmschicht (TBC) 21 z.B. einer keramischen Wärmedämmschicht beschichtet. Entlang der Hinterkante 20 können eine Vielzahl von Hinterkantenöffnungen 28 vorgesehen sein, welche z.B. durch dazwischen angeordnete Stege 30 voneinander getrennt sind. Das durch den Schaufelfuß 12 und das Grundschaufelblatt strömende Kühlmittel wird nun an der Oberseite 25 als auch an den Hinterkantenöffnungen 28 ausgeströmt. Zudem kann auch das Schaufelblatt 16 gebohrte Kühlöffnungen 33 in der Wärmedämmschicht 21 aufweisen. Auf der Wärmedämmschicht 21 bildet sich in dem Bereich um die Kühlöffnungen 33 ein Kühlluftfilm, der die Turbinenschaufel vor einer zu starken Erwärmung schützt.

Die Kühlöffnungen 33 können vor oder nach dem Auftragen der Wärmedämmschicht 21 auf das Grundschaufelblatt eingebracht werden. Werden diese nach dem Auftragen der Wärmedämmschicht 21 eingebracht, muss durch die keramische Wärmedämmschicht 21 hindurch gebohrt werden, was die Maschinenzeiten und damit die Kosten drastisch erhöht und die Haftung zwischen üblicherweise einem metallischen Grundschaufelblatt und einer keramischen Wärmedämmschicht 21 vermindert. Wird die keramische Wärmedämmschicht 21 nach dem Bohren der Kühlluftlöcher 33 aufgetragen, setzen sich die Kühlluftlöcher 33 zum Teil wieder zu. Man kann also entweder die Kühlluftlöcher 33 entsprechend größer bohren und die Variabilität des Kühlluftdurchflusses in Kauf nehmen oder man muss die Kühlluftlöcher 33 nach dem Beschichten mit der keramischen Wärmedämmschicht 21 wieder reinigen, was wiederum zu erheblichen Kosten führt.

Fig. 2 zeigt schematisch und im Querschnitt einen Ausschnitt aus der Grundschaufel mit Anbindungsschicht 45 und Wärmedämmschicht 70 sowie den Schaufelfuß 120. Dabei weist der Schaufelfuß 120 eine Zuführung 40 zum Zuführen von Kühlmittel auf. Die Schaufel weist zudem ein Grundschaufelblatt 55 auf. Das Grundschaufelblatt 55 kann beispielsweise aus einer Nickelbasis-Superlegierung bestehen. Das Grundschaufelblatt 55 weist auch hier eine Oberseite 75 und eine Unterseite 76, als auch eine Grundschaufelmantelfläche 56 auf. Auf dem Grundschaufelblatt 55 zumindest ist teilweise eine Anbindungsschicht 45 vorgesehen, welche mittels thermischen Spritzen aufgebracht wird. Diese Anbindungsschicht 45 ist bevorzugt eine dünne Schicht (20 µm - 50 µm) und dient dazu, eine geeignete Anbindung an den Grundwerkstoff, beispielsweise Nickelbasis-Superlegierung, der Grundschaufel 55 zu erzielen. Zudem ist auf dieser Anbindungsschicht 45 eine Wärmedämmschicht 70 vorgesehen, welche mittels eines generativen Fertigungsverfahrens aufgebracht wird. Dabei handelt es sich bei der Wärmedämmschicht 70 insbesondere um eine keramische Wärmedämmschicht 70. Dabei kann das generative Fertigungsverfahren das selektive Laserschmelzen sein, da sich hier besonders gut Hohlstrukturen herstellen lassen. Aber auch andere Fertigungsverfahren, z.B. Sintern sind vorstellbar. Die Wärmedämmschicht 70 weist zumindest einen Kühlkanal 50 auf, welche mit der Zuführung 40 im Schaufelfuß 120 strömungstechnisch verbunden ist. Dabei ist der Kühlkanal 50 von beliebiger geometriescher Form. Der Kühlkanal 50 erstreckt sich dabei über die gesamte Länge der Anbindungsschicht 45. D.h. er wird an der Spitze des Schaufelblattes 55 ausgeblasen. Wird der Kühlkanal 50 direkt an der Anbindungsschicht 45 angeordnet, so kann er die Außenseite der Grundschaufel 55 mit der Anbindungsschicht 45 als auch die Wärmedämmschicht 70 von innen kühlen. Das Grundschaufelblatt 55 ist somit mit Kühlkanälen 50 versehen, welche sich an die Zuführung 40 im Schaufelfuß 120 anschließen. Auch können Kühlquerkanäle 60 angeordnet werden. Diese 60 sind bevorzugt senkrecht zum Kühlkanal 50 angeordnet. Dabei wird der Kühlkanal 50 als auch der Kühlquerkanal 60 durch das generative Fertigungsverfahren hergestellt, d.h. im Laufe des Fertigungsprozesses der Wärmedämmschicht 70. Durch den Schaufelfuß 120 einströmendes Kühlmittel kann somit auch teilweise durch diese Kühlquerkanäle 60 an einer Wärmedämmschichtaußenseite 80 ausgeströmt werden. Dadurch kann sich auf der Wärmedämmschichtaußenseite 80 eine Filmkühlung ausbilden, durch welche die Wärmedämmschicht 70 großflächig gekühlt wird und durch welche ein direkter Kontakt der Wärmedämmschicht 70 mit dem Heißgas vermieden wird. Dies erhöht die Lebensdauer der gesamten Schaufel, insbesondere verhindert dies die Rissbildung der Wärmedämmschicht 70.

Mittels selektiven Laserschmelzens oder eines anderen generativen Fertigungsverfahrens wird die keramische Wärmedämmschicht im Pulverbett schichtweise aufgebaut. Der Aufbau der Wärmedämmschicht 70 wird dabei schrittweise durchgeführt. Zunächst werden beim Selektiven Laser Melting (SLM) die Daten für die spätere Fertigung der Wärmedämmschicht 70 aus einem 3D-CAD-File erzeugt. Im ersten Berechnungsschritt wird das zu fertigende Bauteil computergestützt in einzelne Schichten unterteilt. Im zweiten Berechnungsschritt werden für jede Schicht die Bahnen (Vektoren) erzeugt, die der Verfestiger, hier der Laser später abfährt. Die so erzeugten Daten werden in einem 2D-Solldatenmodell gespeichert.

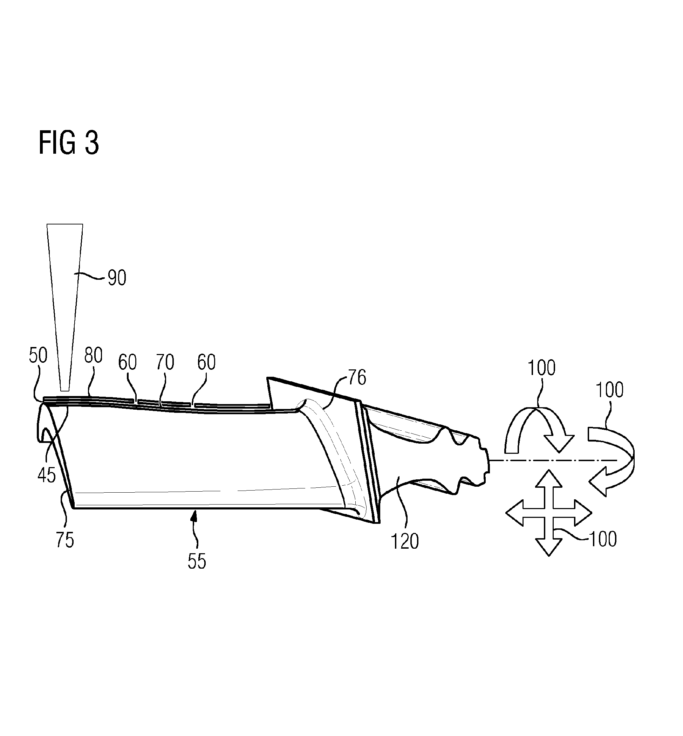

Zuerst wird nun eine Pulverschicht auf die Anbindungsschicht 45 aufgetragen. Dann wird Pulverschicht gemäß des 2D-Solldatenmodells durch einen Verfestiger z.B. Laser 90 (FIG 3) verfestigt, d.h. die vorgegebene Bahn des Laserstrahls sowie die Einstellung (Laserstärke etc.) werden anhand dieses 2D-Solldatenmodells eingestellt. Nach Verfestigen der Pulverschicht gemäß des vorgegebenen 2D-Solldatenmodell wird die Grundschaufel mit der Anbindungsschicht 45 abgesenkt und eine neue Pulverschicht aufgetragen. So werden die Kühlkanäle 50/Kühlquerkanäle 60 in der Wärmedämmschicht 70 als auch die Wärmedämmschicht 70 selber hergestellt.

Für den Herstellprozess von keramischen Wärmedämmschichten 70 mittels generativer Fertigungsverfahren sind Vorwärmtemperaturen von 1200 °C einzusetzen, um Risse und Anbindungsfehler zu vermeiden. Deshalb wird bevorzugt eine Innenkühlung der Schaufel während des Herstellungsprozesses vorgenommen. Während des Herstellungsprozesses wird die Grundschaufel 55 mit der Anbindungsschicht 45 liegend bearbeitet und über einen Roboterarm drehbar 100 und verschiebbar 100 aufgehängt (FIG 3). Dabei ist bevorzugt nur der Schaufelfuß 120 in diesem Roboterarm 100 eingebracht. Es können aber auch andere Halteeinrichtung, in welcher der Schaufelfuß 120 derart angebracht ist, dass die Grundschaufel 55 mit der Anbindungsschicht 45 im Wesentlichen horizontal ausgerichtet ist, verwendet werden. Anschließend wird ein Pulverbett auf zumindest einem Teil der Anbindungsschicht 45 aufgebracht und mit einem Laser 90 verfestigt. FIG 3 zeigt schematisch dieses Verfahren. Dabei kann die Wärmedämmschicht 70 immer abschnittsweise in voller Höhe angebracht werden oder z.B. nach jeder Pulverlage die Grundschaufel 55 mit der Anbindungsschicht 45 oder die bis dahin halbfertige Wärmedämmschicht 70 gedreht werden, um den Rest der Wärmedämmschicht 70 schichtweise auf der kompletten Anhaftungsschicht 45 aufzubringen. Auch die Absenkung und das Aufbringen einer neuen Pulverschicht sind mit einem solchen Roboterarm vereinfacht möglich.

Durch die Erfindung wird eine Wärmedämmschicht 70 mit Kühlkanälen 50 bzw. auch mit Kühlquerkanälen 60 aufgebaut, so dass im Betrieb das Kühlmittel (bevorzugt Kühlluft) allein durch den Schaufelfuß 120 in die Wärmedämmschicht einströmt. Dies bedeutet, dass der Laserbohrprozess durch die Wärmedämmschicht 21 und die Grundschaufel des Stands der Technik, welche meist aus Nickelbasis-Superlegierung ist, entfällt. Dadurch ergeben sich Kostenvorteile. Zudem ergibt sich eine Leistungssteigerung der Schaufel bzw. der Gasturbine, da effektiver gekühlt wird, d.h. es ist weniger Kühlmittel notwendig. Zudem ist die Wärmedämmschicht 70 durch den Wegfall der Bohrungen weniger anfällig für Risse. Dadurch ergibt sich eine Verlängerung der Lebensdauer.

## Patentansprüche

1. Verfahren zur zumindest teilweisen Beschichtung einer Schaufel, wobei die Schaufel zumindest einen Schaufelfuß (120) und ein sich daran anschließendes Grundschaufelblatt (55) umfasst, wobei der Schaufelfuß (120) zumindest eine Zuführung (40) für ein Kühlmittel aufweist, **gekennzeichnet durch** die folgenden Schritte:
- Bereitstellen des Grundschaufelblatts (55) aus einem Grundwerkstoff, umfassend zumindest eine Grundschaufelmantelfläche (56) und eine Oberseite (75) sowie eine sich dem Schaufelfuß (120) anschließende Unterseite (76),
- zumindest teilweises Aufbringen einer Anbindungsschicht (45) auf die Grundschaufelmantelfläche (56),
- Aufbringen einer Wärmedämmschicht (70) zumindest auf die Anbindungsschicht (45) **durch** ein generatives Fertigungsverfahren, wobei beim Aufbringen in die Wärmedämmschicht (70) zumindest ein Kühlkanal (50) zum Führen eines Kühlmittels derart eingebracht wird, dass das in den Schaufelfuß (120) einströmende Kühlmittel **durch** den Kühlkanal (50) zumindest teilweise ausgeströmt wird.

2. Verfahren nach Anspruch 1,
**dadurch gekennzeichnet, dass** als generatives Fertigungsverfahren ein 3D-Laserdruckverfahren angewandt wird.

3. Verfahren nach Anspruch 1,
**dadurch gekennzeichnet, dass** als generatives Fertigungsverfahren das Selektive Laserschmelzen (SLM) angewandt wird.

4. Verfahren nach Anspruch 1,
**dadurch gekennzeichnet, dass** als generatives Fertigungsverfahren das Selektive Lasersintern (SLS) angewandt wird.

5. Verfahren nach einem der vorhergehenden Ansprüche,
**dadurch gekennzeichnet, dass** der zumindest eine Kühlkanal (50) von der Unterseite (76) zur Oberseite (75) führt, so dass das durch den Schaufelfuß (120) in den Kühlkanal (50) einströmende Kühlmittel an der Oberseite (75) ausgeströmt wird.

6. Verfahren nach einem der vorhergehenden Ansprüche,
**dadurch gekennzeichnet, dass** zusätzlich in die Wärmedammschicht (70) ein Kühlquerkanal (60) eingebracht wird, welcher den Kühlkanal (50) mit der Wärmedämmschichtaußenseite (80) strömungstechnisch verbindet, so dass das durch den Schaufelfuß (120) einströmende Kühlmittel zumindest teilweise durch den Kühlquerkanal (60) ausströmt.

7. Verfahren nach Anspruch 6,
**dadurch gekennzeichnet, dass** der Kühlquerkanal (60) im Wesentlichen senkrecht zum Kühlkanal (50) eingebracht wird.

8. Verfahren nach einem der vorhergehenden Ansprüche,
**dadurch gekennzeichnet, dass** die Anbindungsschicht (45) durch thermisches Spritzen aufgebracht wird.

9. Verfahren nach einem der vorhergehenden Ansprüche,
**dadurch gekennzeichnet, dass** in die Grundschaufel (55) zur Führung eines Kühlfluids durch die Grundschaufel (55) von der Unterseite (76) zur Oberseite (75) zumindest ein Kühlsystem eingebracht wird, wobei während des generativen Fertigungsprozesses die Grundschaufel (55) durch das durch dieses Kühlsystem strömende Kühlfluid gekühlt wird.

10. Verfahren nach einem der vorhergehenden Ansprüche,
**dadurch gekennzeichnet, dass** die Wärmedämmschicht (70) durch Verfestigen eines Teils eines auf die Anbindungsschicht (45) aufbrachten Pulverbettes hergestellt wird, wobei nach dem Verfestigen des einen Teils ein neues Pulverbett aufgebracht wird, so dass die Wärmedammschicht (70) schichtweise hergestellt wird.

11. Verfahren nach einem der vorhergehenden Ansprüche,
**dadurch gekennzeichnet, dass** die Grundschaufel (55) mittels einer rotierbaren Haltevorrichtung (100) drehbar und/oder verschiebbar gelagert wird.

12. Verfahren nach Anspruch 11,
**dadurch gekennzeichnet, dass** nach Aufbringen eines Teils der Wärmedämmschicht (70) die Grundschaufel (55) mit der Anbindungsschicht (45) mittels der rotierbaren Haltevorrichtung (100) gedreht und/oder verschoben wird.

13. Verfahren nach einem der vorhergehenden Ansprüche,
**dadurch gekennzeichnet, dass** nach dem Fertigstellen der Wärmedämmschicht (70) das nicht verfestigte Pulver entfernt wird.

14. Beschichtungsvorrichtung zur Herstellung einer Wärmedämmschicht (70) auf einer Grundschaufel (55) mit einer Anbindungsschicht (45) und einem Schaufelfuß (120) umfassend
a) einer rotierbarer Halteeinrichtung (100), in welcher der Schaufelfuß (120) derart angebracht ist, dass die Grundschaufel (55) mit der Anbindungsschicht (45) im wesentlichen horizontal ausgerichtet ist,
b) ein Pulverbett aus Pulver, welches auf zumindest einem Teil der Anbindungsschicht (45) aufgebracht ist,
c) einen Verfestiger, welcher auf einer Basis eines vorab generierten Soll-Datenmodells zumindest einen bestimmten Teil des Pulvers im Pulverbett verfestigt.

15. Beschichtungsvorrichtung zur Herstellung einer Wärmedämmschicht (70) nach Anspruch 14,
**dadurch gekennzeichnet, dass** der Verfestiger ein Laser (90) ist.

16. Beschichtungsvorrichtung zur Herstellung einer Wärmedämmschicht (70) nach Anspruch 14 oder 15,
**dadurch gekennzeichnet, dass** die rotierbare Halteeinrichtung (100) drehbar und/oder verschiebbar gelagert ist.

17. Beschichtungsvorrichtung zur Herstellung einer Wärmedämmschicht (70) nach einem der Ansprüche 14-16,
**dadurch gekennzeichnet, dass** die Halteeinrichtung (100) ein Roboterarm ist.

18. Schaufel, insbesondere Turbinenschaufel, wobei die Schaufel einen Schaufelfuß (120) und ein daran sich anschließenden Grundschaufelblatt (55) umfasst, wobei der Schaufelfuß (120) zumindest eine Zuführung (40) für ein Kühlmittel aufweist,
**dadurch gekennzeichnet, dass** auf dem Grundschaufelblatt (55) zumindest teilweise eine durch thermisches Spritzen aufgebrachte Anbindungsschicht vorgesehen ist, und wobei auf dieser Anbindungsschicht eine durch ein generatives Fertigungsverfahren aufgebrachte Wärmedämmschicht (70) mit zumindest einem Kühlkanal (50) vorgesehen ist, und wobei der zumindest eine Kühlkanal (50) mit der Zuführung (40) im Schaufelfuß (12) strömungstechnisch verbunden ist.

19. Schaufel nach Anspruch 18,
**dadurch gekennzeichnet, dass** die Grundschaufel (55) zumindest einen Grundschaufelmantel, eine Oberseite (75) und eine Unterseite (76) aufweist, und wobei lediglich die Oberseite (75) und die Unterseite (76) zumindest eine Kühlöffnung (36) für ein Kühlmittel aufweisen.

20. Schaufel nach einem der Ansprüche 18-19,
**dadurch gekennzeichnet, dass** zumindest ein Kühlquerkanal (60) vorgesehen ist, welcher strömungstechnisch den Kühlkanal (50) mit der Wärmedämmschichtaußenseite (80) verbindet, so dass das durch den Kühlkanal (50) strömendes Kühlmittel zumindest teilweise an der Wärmedämmschichtaußenseite (80) ausströmbar ist.

21. Schaufel nach Anspruch 20,
**dadurch gekennzeichnet, dass** der Kühlquerkanal (60) im Wesentlichen senkrecht zum Kühlkanal (50) angeordnet ist.
